## Europäisches Patentamt

## European Patent Office

## Office européen des brevets

(19)

(11) Veröffentlichungsnummer: **0 025 901**
**B1**

(12) **EUROPÄISCHE PATENTSCHRIFT**

(45) Veröffentlichungstag der Patentschrift:
**05.12.84**

(51) Int. Cl.³: **F 16 D 3/19,** F 16 D 3/10

(21) Anmeldenummer: **80105184.8**

(22) Anmeldetag: **15.09.78**

(60) Veröffentlichungsnummer der früheren Anmeldung
nach Art. 76 EPÜ:

(54) **Elastische Kupplung.**

(30) Priorität: **21.09.77 DE 2742442**

(43) Veröffentlichungstag der Anmeldung:
**01.04.81 Patentblatt 81/13**

(45) Bekanntmachung des Hinweises auf die Patenterteilung:
**05.12.84 Patentblatt 84/49**

(84) Benannte Vertragsstaaten:
**BE CH FR GB LU NL SE**

(56) Entgegenhaltungen:
**DE - A - 2 135 589**
**DE - B - 1 283 607**
**DE - B - 1 299 949**
**FR - A - 1 059 414**
**GB - A - 438 478**
**US - A - 1 435 141**
**US - A - 2 701 456**
**US - A - 3 473 349**
**US - A - 4 047 395**

(73) Patentinhaber: **Balcke-Dürr AG, Homberger Strasse 2,
D-4030 Ratingen (DE)**

(72) Erfinder: **Fickelscher, Kurt G., Herderstrasse 19,
D-6710 Frankenthal (DE)**

(74) Vertreter: **Klose, Hans, Dipl.-Phys., Kurfürstenstrasse 32,
D-6700 Ludwigshafen (DE)**

ACTORUM AG

## Beschreibung

Die Erfindung betrifft eine elastische Kupplung mit zwei auf Wellenenden angeordneten gleichartigen Zahnrädern, sowie mit einem die beiden Zahnräder axial überdeckenden Kupplungszahnkranz, dessen Kupplungszähne aus Blech gebildet sind, das entsprechend der Gestalt der Zahnlücken der Zahnräder gebogen ist, wobei die Kupplungszähne die gleiche Winkelteilung wie die Zähne der Zahnräder haben und in die Zahnlücken der Zahnräder eingreifen und wobei die Zahnreihen der Zahnräder nebeneinander liegen.

In der US-PS 2 701 456 ist eine elastische Kupplung beschrieben, bei welcher der Kupplungszahnkranz eine Hülse aufweist, in welcher die Kupplungszähne gehalten sind. Die Kupplungszähne sind aus gewelltem Blech gefertigt, wobei mehrere Teile über den Umfang verteilt und unmittelbar aneinander anschliessend angeordnet sind. Diese Teile bzw. die Kupplungszähne liegen mit ihren Stirnflächen an ringförmigen Stirnbereichen der Kupplungshülse an, damit bei Belastung eine axiale Ausrichtung der Kupplungszähne beibehalten wird. Die Kupplungshülse selbst besteht aus zwei Teilen, die mittels Schrauben in axialer Richtung miteinander verbunden sind. Beim Einsatz einer derartigen Kupplung in schnelldrehenden Maschinen ist die hierdurch bedingte relativ grosse Gesamtmasse ersichtlich von Nachteil. Die Fertigung und der Zusammenbau der verschiedenen Einzelteile erfordern einen vergleichweise grossen Aufwand bei entsprechend hohen Fertigungskosten.

Ferner ist in der US-PS 1 435 141 eine elastische Kupplung beschrieben, bei welcher der aus gewelltem Blech mit nicht geschlossenem Umfang gebildete Kupplungszahnkranz ebenfalls von einer Hülse umgeben ist. Bei Belastung der Kupplung liegt der Kupplungszahnkranz an der Innenfläche der Kupplungshülse an und die Kupplungszähne werden in Umfangsrichtung auf Biegung beansprucht. Ein radiales Ausweichen des Kupplungszahnkranzes bzw. der Kupplungszähne ist aufgrund der umgebenden Kupplungshülse praktisch nicht möglich. Drehschwingungen und Drehstösse werden nur wenig gedämpft von der einen auf die andere Kupplungshälfte übertragen. Ferner sind aufgrund der Kupplungshülse im Hinblick auf Achsversatz und Winkelversatz der Kupplungshälften konstruktive Grenzen gesetzt.

Der Erfindung liegt daher die Aufgabe zugrunde, eine elastische Kupplung der eingangs genannten Art vorzuschlagen, welche einen einfachen konstruktiven Aufbau aufweist und mit welcher eine gute Dämpfung im Hinblick auf Drehschwingungen und Drehstösse erreicht wird und mit welcher ein vergleichsweise grosser Achsbzw. Winkelversatz der genannten Wellenenden ausgleichbar ist.

Zur Lösung dieser Aufgabe wird vorgeschlagen, dass die Zahnflanken der Zahnräder eben ausgebildet sind und dass der Kupplungszahnkranz aus einem ringförmigen, geschlossenen Blech, welches die Kupplungszähne aufweist, besteht, das radial nicht von einer Hülse abgestützt ist.

Die vorgeschlagene elastische Kupplung zeichnet sich durch einen einfachen Aufbau aus, wobei aufgrund der ebenen Ausbildung der Zahnflanken der Zahnräder zum einen die Flächenpressung verringert werden kann und zum anderen auch die Zähne des Kupplungszahnkranzes bei Belastung auf diesen ebenen Zahnflanken gleiten können. Folglich weist die erfindungsgemässe Kupplung ein vergleichweise geringes Bauvolumen auf und zum anderen erfolgt aufgrund der bei Belastungsänderung sich ergebenden Gleitbewegungen eine sehr gute Dämpfung von Drehschwingungen oder Anfahrstössen od.dgl. Der Kupplungszahnkranz besteht aus einem ringförmigen, geschlossenem Blech und eine die Kupplungszähne abstützende Hülse od.dgl. entfällt. Die Masse der rotierenden Teile wird dadurch verringert und zum anderen wird auch die Fertigung vereinfacht. Das ringförmige, geschlossene Blech ermöglicht ohne Schwierigkeiten entsprechende Relativbewegungen zwischen den beiden Kupplungshälften bzw. Zahnrädern, so dass mit der vorgeschlagenen elastischen Kupplung auch ein entsprechend grosser Winkelversatz oder Achsversatz ausgeglichen werden kann. Die Elastizität der vorgeschlagenen Kupplung wird im wesentlichen durch die elastische radiale Beweglichkeit der Kupplungszähne bewirkt, zumal in radialer Richtung keine Hülse od.dgl. die Beweglichkeit einschränkt.

In einer besonderen Ausführungsform ist das Blech als ein Zick-Zack-Blech mit ebenen Zahnflanken der Kupplungszähne ausgebildet. Die Zähne vom Kupplungskranz und die anliegenden Kupplungszähne weisen somit eine relativ grosse Auflagefläche auf, und bei einer vorgegebenen zulässigen Flächenpressung ist ein vergleichweise grosses Drehmoment übertragbar.

In einer besonderen Ausführungsform weist die Zahnreihe des Kupplungskranzes Fehlstellen auf. Diese Fehlstellen sind zweckmässig in regelmässiger Folge über den Umfang verteilt angeordnet. Die Elastizität des Kupplungszahnkranzes kann vor allem bei bogenförmiger Ausbildung im Bereich der Fehlstelle erhöht werden.

Anhand der in der Zeichnung dargestellten Ausführungsbeispiele soll nachfolgend die Erfindung näher erläutert werden. Es zeigen:

Fig. 1 einen axialen Längsschnitt durch eine obere Hälfte einer Kupplung,

Fig. 2 einen Schnitt entlang Schnittlinie II gemäss Fig. 1,

Fig. 3, 4, 5 die Anordnung eines hier schematisch dargestellten einzelnen Zahnes des Kupplungszahnkranzes zwischen benachbarten Zähnen der Zahnräder,

Fig. 6 eine Ansicht in axialer Richtung auf zwei axial nebeneinanderliegende Zahnräder,

Fig. 7 eine Ausführungsform ähnlich Fig. 1, wobei der Kupplungszahnkranz Fehlstellen aufweist,

Fig. 8 eine axiale Ansicht einer Kupplung mit einem Achsversatz der beiden Zahnräder,

Fig. 9 vergrössert ein Detail gemäss Fig. 8 zur Erläuterung des Achsversatzes,

Fig. 10 teilweise einen Schnitt durch eine Ausführungsform einer Kupplung, bei welcher die Zahnkränze der beiden Zahnräder ebenfalls als Zick-Zack-Bleche ausgebildet sind,

Fig. 11 eine weitere Ausführungsform ähnlich Fig. 10,

Fig. 12 teilweise einen axialen Längsschnitt durch eine Ausführungsform, bei welcher die Zahnräder eine Innenverzahnung aufweisen und

Fig. 13 einen Schnitt entlang Schnittlinie XIII gemäss Fig. 12.

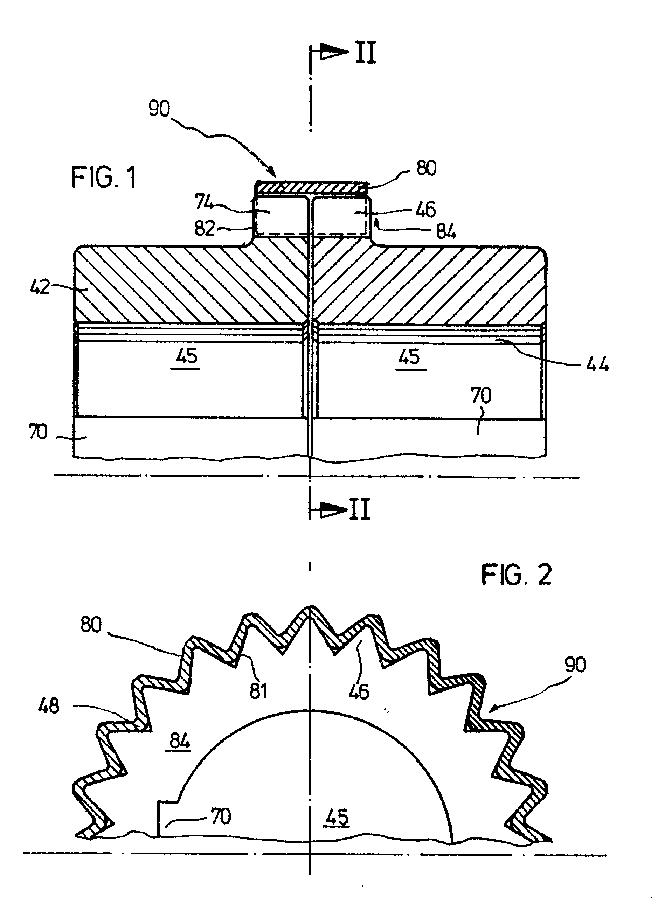

Gemäss Fig. 1 und 2 enthält die elastische Kupplung einen innenverzahnten Kupplungskranz 90 und zwei aussenverzahnte gleichartige Zahnräder 82, 84. Die Zahnräder 82, 84 enthalten Zähne 46 und 74, die auf zwei Kupplungsnaben 44, 42 angeordnet sind. Diese Kupplungsnaben 44, 42 sind zur Befestigung auf hier nicht weiter dargestellten Wellenenden jeweils mit einer Bohrung 45 sowie mit Passfedernuten 70 versehen. Hierbei ist die Anordnung der beiden Zahnräder 82 und 84 so getroffen, dass diese etwa fluchtend und unmittelbar nebeneinander angeordnet sind.

Die Anzahl und die Form sowie sämtliche eine Verzahnung kennzeichnenden Merkmale der Zähne 46 und 74 der beiden Zahnräder sind identisch ausgeführt und so nebeneinander angeordnet, dass jeweils ein Kupplungszahn 48 des Kupplungskranzes 90 im Eingriff ist mit den Zähnen 46, 74 der Zahnräder. Hierzu ist es erforderlich, dass die axiale Breite der Kupplungszähne 48 etwa so gross ist wie die gemeinsame axiale Erstreckung der Zähne 46 und 74 der Zahnräder.

Der Aufbau des Kupplungszahnkranzes 90 ist am besten aus dem Querschnitt gemäss Fig. 2 zu erkennen. Die Kupplungszähne 48 sind durch ein Zick-Zack-Blech 80 gebildet, welches derart gefaltet ist, dass seine Zacken 81 in die Zahnlücken der Zahnräder 82 und 84 eingreifen und somit die Kupplungszähne 48 des Kupplungszahnkranzes 90 bilden. Das Zick-Zack-Blech 80 besteht aus elastischem, federnden Material, z.B. Stahl.

Als Richtwert können 1–5 mm, vorzugsweise 2–3 mm für die Dicke des Zick-Zack-Bleches gelten. Wie aus den Figuren deutlich zu ersehen ist, haben sämtliche Zähne ein dreieckförmiges Profil und ebene Zahnflanken, wobei die Zahnspitzen gegebenenfalls abgerundet sind.

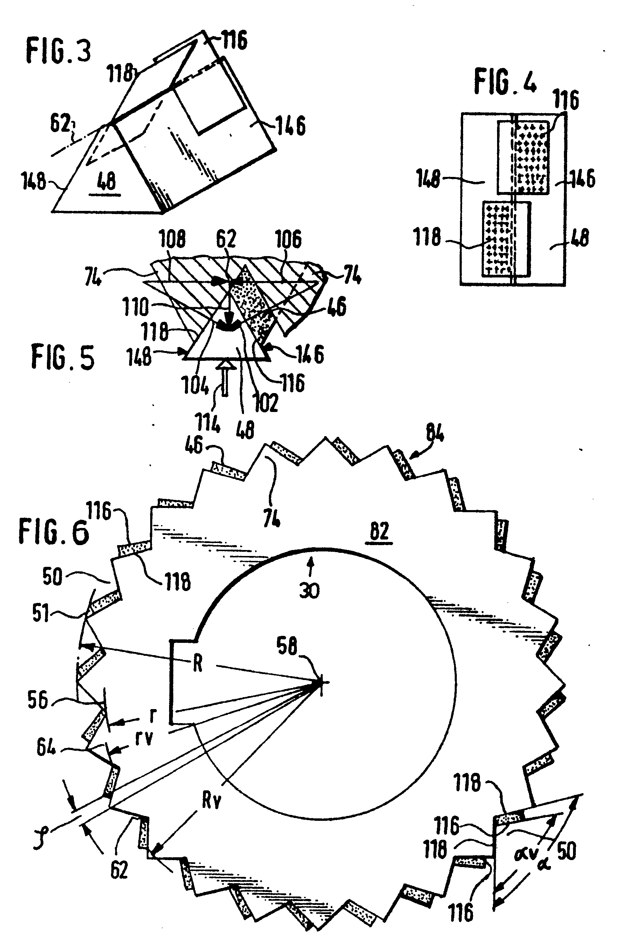

Die Fig. 3 und 4 zeigen einen Kupplungszahn 48 des Kupplungszahnkranzes und sein Zusammenwirken mit den Zähnen 46 und 74 der Zahnräder. Hierbei sind die Zähne 46 und 74 nur durch die Zahnflanken 116 und 118 der Zähne 46 und 74 angedeutet. Man erkennt, dass der einen Zahnflanke 146 des Kupplungszahnes 48 die Zahnflanke 116 eines Zahnradzahnes, der anderen Zahnflanke 148 des Kupplungszahnes 48 die Zahnflanke 118 eines anderen Zahnradzahnes anliegt. Die beiden Zahnflanken 116 und 118 bilden miteinander die «virtuelle Zahnlücke», welche vom Kupplungszahn 48 etwa vollständig ausgefüllt wird. In den Fig. 3 bis 5 ist der Kupplungszahn 48 der einfacheren Darstellung wegen als massiver Zahn dargestellt, obwohl er aus einem gebogenen Blech besteht und daher hohl ist.

Fig. 4 zeigt den Gegenstand der Fig. 3 in Aufsicht. Die am Kupplungszahn 48 anliegenden Bereiche der Zahnflanken 116 und 118 sind hierbei mit Kreuzchen bezeichnet.

Wird während des Betriebs der Kupplung ein Drehmoment zwischen den beiden Kupplungsnaben 42 und 44 übertragen, so werden die Kupplungszähne 48 des Kupplungszahnkranzes infolge ihrer elastischen Ausbildung radial nach aussen gedrückt und verformt. Die Folge ist, dass sich die beiden Kupplungsnaben 42 und 44 um einen Verdrehwinkel $\gamma$ gegeneinander verdrehen. Dieser Fall ist in Fig. 6 dargestellt.

Fig. 6 zeigt die Seitenansicht auf zwei nebeneinander angeordnete Zahnräder, wie z.B. die Ansicht des Gegenstandes der Fig. 1 von links, in kleinerem Massstab, jedoch ohne den Kupplungszahnkranz 90 und ohne den Ring 47, wobei die sichtbaren Teile der Zähne 46 punktiert sind.

Die beiden hintereinanderliegenden Zahnräder 82 und 84 sind um einen Verdrehwinkel $\gamma$ gegeneinander verdreht. Die Zahnflanken 116 und 118 der Zähne der beiden Zahnräder bilden miteinander zwei Reihen von virtuellen Zahnlücken 50 und 51. Die Flanken der grösseren virtuellen Zahnlücke 50 schneiden sich einmal in einer Linie 62, die als virtuelle Zahnlückenspitze 62 erkennbar ist. Alle diese virtuellen Zahnlückenspitzen 62 liegen auf dem «virtuellen Fusskreis» 64, der den Radius rv aufweist.

Daneben entsteht noch eine Reihe von kleineren virtuellen Zahnlücken 51, deren Spitzen auf dem Radius Rv liegen. Die radiale Tiefe der Zahnlücken 51 ist jedoch erheblich geringer als die radiale Tiefe der Zahnlücken 50, so dass für das Eingreifen des Kupplungszahnkranzes praktisch von den beiden entstehenden Zahnlücken 50 und 51 nur die Reihe von virtuellen Zahnlücken 50 mit dem Fusskreis rv genutzt wird, welche die grössere radiale Tiefe aufweisen.

Fig. 5 zeigt nun das Zusammenarbeiten der Kupplungszähne 48 des Kupplungszahnkranzes 90 mit den virtuellen Zahnlücken 50 der Zahnräder. Hierzu zeigt diese Figur einen Ausschnitt aus der unteren Hälfte der Fig. 6 in grösserem Massstab, wobei zusätzlich ein einziger Kupplungszahn 48 und die mit diesem zusammenarbeitenden Zähne 46, 74 der Zahnräder dargestellt sind.

Da die Zahnräder gegeneinander verdreht sind, bildet die Zahnflanke 118 des vorderen Zahnrades 74 zusammen mit der Zahnflanke 116 des hinteren Zahnrades eine virtuelle Zahnlücke, die vom Kupplungszahn 48 ausgefüllt ist. Die Zahnflanke 148 des Kupplungszahnes 48 liegt daher an der Zahnflanke 118 des vorderen Zahnes 74 an, wogegen die Zahnflanke 146 des Kupplungszahnes 48 an der Zahnflanke 116 des hinteren Zahnes 46 anliegt. Im vorliegenden Beispiel weist die Spitze des Kupplungszahnes 48 keine Abrundung auf, so dass sich die virtuelle Zahnlückenspitze 62 mit der Spitze des Kupplungszahnes 48 deckt. Wäre die Spitze des Kupplungszahnes 48 in üblicher Weise abgerundet, so träfe das nicht zu.

Die Zähne 46 und 74 wirken auf den Kupplungszahn 48 mit den durch die Pfeile 102 und 104 angedeuteten Kräften. Diese Kräfte sind in die tangentialen Komponenten 106 und 108 einerseits und in die radiale Komponente 110 andererseits zerlegt. Man erkennt, dass die tangentialen Komponenten 106 und 108 sich aufheben, was zur Folge hat, dass auf den Kupplungszahn 48 keine Kräfte in Umfangsrichtung wirken. Dies ist der Grund, warum der Kupplungszahnkranz 90 in Umfangsrichtung keine Kräfte zu übertragen braucht und daher dünn und elastisch ausgebildet sein kann, ohne dass dadurch die Lebensdauer und die Leistungsfähigkeit der Kupplung, höchste Drehmomente zu übertragen, beeinträchtigt wird. Auf den Kupplungszahn 48 wirkt nur die radiale Kraftkomponente 110.

Aufgrund der geschlossenen Ausbildung des ringförmigen Bleches des Kupplungszahnkranzes wirkt eine Rückstellkraft in Richtung des Pfeiles 114 in die virtuellen Zahnlücken. Mit zunehmendem Verdrehwinkel $\gamma$ bewegt sich die Schnittlinie 62 stetig nach aussen. Der Fusskreisradius rv der virtuellen Zahnlücke wird grösser, die Kupplungszähne 48 werden nach aussen geschoben, so dass die ebenen Zahnflanken aufeinander gleiten. Die radiale Verschiebung ist durch die elastische Ausbildung des Kupplungszahnkranzes 90 möglich.

Verbinden die beiden Kupplungshälften eine Kraftmaschine und eine Arbeitsmaschine, so muss beim Anfahren der Kraftmaschine zunächst ein sehr hohes Drehmoment übertragen werden, um die Arbeitsmaschine zu beschleunigen. Wenn die Federkraft bzw. Verformbarkeit der aus Blech bestehenden Kupplungszähne 48 entsprechend weich eingestellt ist, werden die Kupplungszähne 48 weit nach aussen gedrückt und dies hat zunächst einen relativ grossen Verdrehwinkel $\gamma$ der Zahnräder zur Folge. Die Federkraft trachtet jedoch danach, die Kupplungszähne 48 wieder in die ursprüngliche Form bzw. Lage zu bringen und somit den Verdrehwinkel zu vermindern. Im stationären Betriebszustand wird der Verdrehwinkel $\gamma$ dann wieder Null oder fast Null.

Wie aus den vorstehenden Ausführungen hervorgeht, wird die Elastizität der erfindungsgemässen Kupplung durch die radiale Beweglichkeit der Zähne des Kupplungszahnkranzes bewirkt, wobei die Grösse dieser Beweglichkeit durch die Elastizität des Zick-Zack-Bleches.

Zusätzlich trägt die elastische Torsion der Kupplungszähne 48 im Spalt zwischen den beiden Kupplungshälften zur Drehelastizität der Kupplung bei. Durch die Elastizität wird eine Dämpfung von gegebenenfalls auftretenden Drehschwingungen oder Drehstössen erreicht. Die Dämpfungscharakteristik ist in diesem Falle abhängig von der Zähnezahl und vom Flankenwinkel der Zähne der Zahnräder. Hierbei gilt, dass die Dämpfung mit der Anzahl der Zahnradzähne ansteigt, ebenso steigt die Dämpfung an mit kleiner werdendem Flankenwinkel der Zähne der Zahnräder.

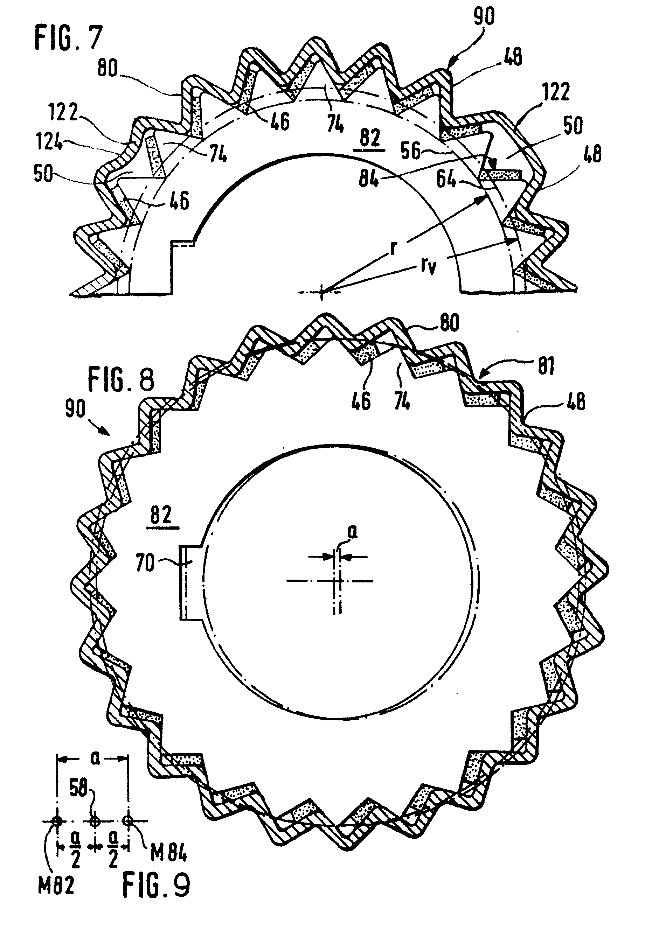

Fig. 7 zeigt die obere Hälfte der Fig. 1 in Seitenansicht von links, wobei die beiden Zahnräder einen Verdrehwinkel aufweisen, der im Gegensatz zu Fig. 1 oder 2 grösser als Null ist. Der besseren Übersicht wegen ist das Zick-Zack-Blech 80 schraffiert dargestellt, obwohl es nicht geschnitten ist. Man erkennt, dass das Zick-Zack-Blech 80 radial nach aussen gedrückt ist. Die Grösse der Verdrängung des Zick-Zack-Bleches 80 nach aussen ist durch die Differenz rv-r gegeben, wobei rv der Radius jenes virtuellen Fusskreises 64 ist, auf welchem die virtuellen Zahnlückenspitzen liegen, wogegen r der Fusskreisradius der Zahnräder bei einem Verdrehwinkel $\gamma$ = 0 darstellt.

Gleichzeitig sind in Fig. 7 noch Fehlstellen 122 des Kupplungszahnkranzes 90 zu erkennen. An diesen Fehlstellen 122 weist der Kupplungszahnkranz keine Kupplungszähne 48 auf. Eine solche Ausbildung ist dann möglich, wenn für die Übertragung des Drehmomentes nicht sämtliche Kupplungszähne 48 erforderlich sind. Wie aus Fig. 7 rechts ersichtlich, wird zur Bildung der Fehlstelle 122 das Zick-Zack-Blech 80 über die virtuelle Zahnlücke 50 hinweg geführt und erst an der nächsten virtuellen Zahnlücke ein Kupplungszahn 48 gebildet; eine virtuelle Zahnlücke 50 bleibt somit frei. Auf der linken Hälfte der Fig. 7 ist eine Fehlstelle 122 in einer Ausführungsvariante bezüglich des Zick-Zack-Bleches 80 dargestellt. Das Zick-Zack-Blech bildet hier nämlich einen in die virtuelle Zahnlücke 50 ragenden Bogen 124, der jedoch die Zahnflanken der Zahnräder nicht berührt. Durch diese Ausbildung des Zick-Zack-Bleches 80 als Bogen 124 im Bereich der virtuellen Zahnlücke 50 wird die Elastizität des Zick-Zack-Bleches erhöht. Wie aus Fig. 7 ebenfalls ersichtlich, sind die Fehlstellen 122 in regelmässiger Folge angeordnet; der Abstand zwischen zwei Fehlstellen beträgt hierbei 6 Zähne des Kupplungszahnkranzes 90.

Wie aus Fig. 8 zu entnehmen ist, sind die Zahnräder, d.h. die zu kuppelnden Wellen, um einen Versatz a gegeneinander versetzt angeordnet. Der Fusskreis der virtuellen Zahnlücken bleibt dabei kreisrund. Sein Mittelpunkt 58 halbiert den Versatz a (fast) genau, wie insbesondere aus Fig. 9 ersichtlich, die das Zentrum der Fig. 8 vergrössert darstellt.

Hierbei bezeichnet der Versatz a den Abstand der Mittelpunkte M 84 und M 82 der Zahnräder 84 und 82.

Die Zähne 46 des hinteren Zahnrades 84 sind in Fig. 8, ebenso wie bei den übrigen Figuren, durch Pünktchen angedeutet, soweit sie nicht durch die Zähne 74 des vorderen Zahnrades 82 verdeckt sind. Man erkennt in Fig. 8, dass die Zähne 46 wegen des Versatzes a auf der linken Seite weniger sichtbar sind als auf der rechten Seite. Da jedoch der Mittelpunkt 58 des Fusskreises der virtuellen Zahnlückenreihe den Versatz halbiert, macht sich der Versatz a an den Zähnen nur in halber Grösse bemerkbar. Dies bringt es mit sich, dass der Kupplungszahnkranz 90 beim Umlauf zwar eine Radialbewegung durchführt, dass diese jedoch nur um a/2 erfolgt. Dies hat zur Folge, dass auch die Rückstellkräfte, die auf die Lager der Wellen wirken, entsprechend reduziert und die Schwingungsanregungen halbiert werden. An den Zahnflanken findet ein zusätzliches Gleiten statt. Die Kupplung benötigt dadurch bei grosser Antriebsleistung eine Fett- oder Ölschmierung, die auch als Kühlung dienen kann.

Wie aus Fig. 6 ersichtlich, bilden die Zahnflanken 118 miteinander den Winkel α. Ebenso bilden die Zahnflanken 116 miteinander den gleichen Winkel α. Die virtuelle Zahnlücke 50 jedoch ist einerseits von einer Zahnflanke 118 und andererseits von einer Zahnflanke 116 begrenzt. Diese Zahnflanken 118 und 116 bilden miteinander einen kleineren Winkel $\alpha_v$. Der Wert dieses Winkels $\alpha_v$ stimmt mit α überein, wenn der Verdrehwinkel γ der Zahnräder gleich Null ist. Mit zunehmendem Verdrehwinkel γ nimmt der Wert von $\alpha_v$ ab, d.h. die virtuelle Zahnlücke 50 wird zunehmend spitzer. Das flächige Anliegen der in Fig. 6 nicht eingezeichneten Kupplungszähne wird hierbei durch die elastische Federung der Kupplungszähne an den Zahnspitzen erreicht, wodurch eine Anpassung der Flankenwinkel der Kupplungszähne ermöglicht wird.

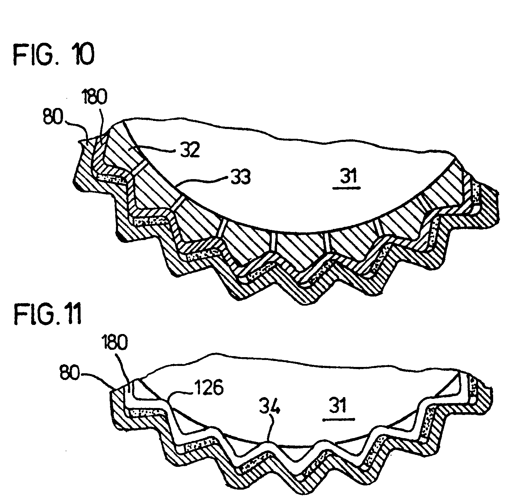

Fig. 10 zeigt einen Querschnitt durch eine Kupplung im Bereich eines Zahnrades, wobei nur der untere Teil dargestellt ist. Wie aus der Zeichnung ersichtlich, weisen die Zahnräder keine Kupplungsnaben auf, sondern auf die zu kuppelnden Wellen 31 sind keilförmige Elemente 32, z.B. aus Metall, aufgelegt, deren Innenflächen 33 jeweils an der Aussenfläche der Wellen 31 glatt anliegen. Die Zahnreihen der Zahnräder werden durch Zick-Zack-Bleche 180 gebildet. Das Zick-Zack-Blech 180 ist geschlossen und mit Vorspannung über die keilförmigen Elemente 32 gelegt, die zur Montage auf die Welle aufgeklebt sein können. Das aus den keilförmigen Elementen 32 und dem Zick-Zack-Blech 180 bestehende Zahnrad sitzt somit unmittelbar auf der Welle 31 und eine Kupplungsnabe ist bei dieser sehr einfachen Konstruktion daher nicht erforderlich.

Bei der Konstruktion der Fig. 10 bestehen beide Zahnräder aus derartigen keilförmigen Elementen 32 mit unter Vorspannung aufgebrachten Zick-Zack-Blechen 180. Auch die Zahnreihe des Kupplungszahnkranzes ist durch ein Zick-Zack-Blech 80 gebildet. Auch das Zick-Zack-Blech 180 ist zu einem Ring geschlossen.

Eine im Prinzip ähnliche Konstruktion ist in Fig. 11 dargestellt, doch entfallen bei der dort dargestellten Konstruktion die keilförmigen Elemente 32. An ihrer Stelle sind in der Welle 31 abgerundete Kerben 126 angebracht, in welche die nach innen gerichteten Kanten 34 des Zick-Zack-Bleches 180, welches jeweils das Zahnrad bildet, eingreifen. Diese Kerben 126 müssen hinreichend tief sein, damit bei den auftretenden Drehmomenten das Zick-Zack-Blech 180 nicht aus den Kerben 126 herausgerissen wird. Lässt man hingegen ein Heraustreten des Zick-Zack-Bleches 180 aus den Kerben 126 bei einer bestimmten Belastung zu, z.B. durch eine entsprechende Tiefe der Kerben 126, so kann auf diese Weise eine Sicherheitsrutschkupplung gebildet werden, welche die beiden gekuppelten Wellen beim Erreichen eines bestimmten Drehmomentes trennt.

Die Konstruktion der Fig. 11 hat gegenüber der Fig. 10 den Vorteil, dass die keilförmigen Elemente 32 entfallen. Andererseits ist bei der Konstruktion der Fig. 10 hervorzuheben, dass keinerlei Bearbeitung der Welle 31 erforderlich ist, da die keilförmigen Elemente 32 durch Reibungsschluss die erforderliche Drehmomentübertragung erzielen.

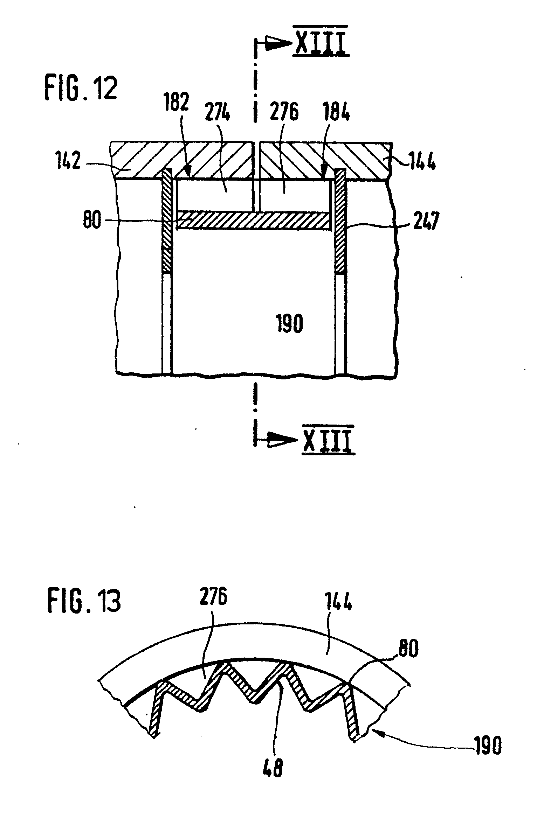

Während in den bisherigen Ausführungsbeispielen gemäss Fig. 1 bis 11 die Zahnräder aussenverzahnt sind und der Kupplungszahnkranz innenverzahnt ist, zeigen die Fig. 12 und 13 den umgekehrten Fall, wobei Fig. 12 einen axialen Längsschnitt durch die obere Hälfte einer Kupplung zeigt und Fig. 13 einen Querschnitt gemäss der Schnittlinie XIII–XIII der Fig. 12 darstellt.

Danach sind die Kupplungsnaben 142 und 144 oder die zu kuppelnden Wellen hohl ausgebildet und weisen an ihren Enden nach innen gerichtete Zähne 274 und 276 auf, welche die innenverzahnten Zahnräder 182 und 184 bilden. Innerhalb der Zahnräder 182, 184 ist der aussenverzahnte Kupplungszahnkranz 190 angeordnet, welcher aus einem Zick-Zack-Blech 80 besteht, das in die Zahnlücken der Zahnräder eingreift.

Auch könnten die Kupplungsnaben 142, 144 gegebenenfalls radial federnd, d.h. elastisch ausgebildet sein, um eine zusätzliche Federbeaufschlagung der Zähne zu erreichen.

Zum Schutz gegen das Eindringen von Schmutz oder Staub und zur axialen Führung sind Ringe 247 in umlaufende Nuten der Kupplungsflansche 142 und 144 eingesetzt. Die Wirkungsweise dieser Kupplung entspricht der Wirkungsweise der Kupplung gemäss dem Ausführungsbeispiel nach Fig. 1 und 2, jedoch mit dem Unterschied, dass die Zähne des Kupplungszahnkranzes 190 radial nach aussen gerichtet sind und in die radial nach innen gerichteten Zähne der innenverzahnten Zahnräder eingreifen. Selbstverständlich sind auch bei einer Kupplung gemäss Fig. 12 und 13 sämtliche Ausführungsvarianten, die im Zusammenhang mit den Fig. 1 bis 11 erläutert wurden, anwendbar.

**Patentansprüche**

1. Elastische Kupplung mit zwei auf Wellenenden angeordneten gleichartigen Zahnrädern (82, 84) sowie mit einem die beiden Zahnräder axial überdeckenden Kupplungszahnkranz (90), dessen Kupplungszähne aus Blech gebildet sind, welches entsprechend der Gestalt der Zahnlücken der Zahnräder (82, 84) gebogen ist, wobei die Kupplungszähne (48) die gleiche Winkelteilung wie die Zähne der Zahnräder (82, 84) haben und in die Zahnlücken der Zahnräder eingreifen und wobei die Zahnreihen der Zahnräder (82, 84) nebeneinanderliegen, dadurch gekennzeichnet, dass die Zahnflanken der Zahnräder (82, 84) eben ausgebildet sind, und dass der Kupplungszahnkranz aus einem ringförmigen geschlossenen Blech (80), welches die Kupplungszähne (48) aufweist, besteht, das radial nicht von einer Hülse abgestützt ist.

2. Elastische Kupplung nach Anspruch 1, dadurch gekennzeichnet, dass das Blech (80) als ein Zick-Zack-Blech mit ebenen Zahnflanken der Kupplungszähne (48) ausgebildet ist.

3. Elastische Kupplung nach Anspruch 1 oder 2, dadurch gekennzeichnet, dass die Zahnreihe des Kupplungszahnkranzes (90) wenigstens eine Fehlstelle (122) aufweist.

4. Elastische Kupplung nach Anspruch 3, dadurch gekennzeichnet, dass die Fehlstellen (122) äquidistant angeordnet sind.

## Claims

1. A resilient coupling comprising two similar gearwheels (82, 84) mounted on shaft ends and a toothed coupling ring (90) which axially surrounds the two gearwheels and has coupling teeth formed from metal sheet which is bent in accordance with the shape of the tooth spaces of the gearwheels (82, 84), the coupling teeth (48) having the same angular pitch as the teeth of the gearwheels (82, 84) and engaging in the tooth spaces of the gearwheels and the rows of teeth of the gearwheels (82, 84) being adjacent one another, characterized in that the tooth flanks of the gearwheels (82, 84) are flat, and that the toothed coupling ring comprises a continuous annular metal sheet (80) which comprises the coupling teeth and which is not supported radially by a sleeve.

2. A resilient coupling according to Claim 1, characterized in that the metal sheet (80) is formed as a zigzag metal sheet with flat tooth flanks of the coupling teeth (48).

3. A resilient coupling according to Claim 1 or 2, characterized in that the row of teeth of the toothed coupling ring (90) comprises at least one gap (122).

4. A resilient coupling according to Claim 3, characterized in that the gaps (122) are equidistantly arranged.

## Revendications

1. Accouplement élastique comprenant deux roues dentées analogues (82, 84) montées sur des bouts d'arbres, ainsi qu'une couronne dentée d'accouplement (90) qui recouvre axialement les deux roues dentées, dont les dents d'accouplement sont réalisées en tôle qui est pliée conformément à la configuration des entredents des roues dentées (82, 84), les dents d'accouplement (48) ayant le même pas angulaire que les dents des roues dentées (82, 84) et s'engageant dans les entredents des roues dentées, et les séries de dents des roues dentées (82, 84) étant juxtaposées, caractérisé en ce que les flancs des dents des roues dentées (82, 84) sont de configuration plane et en ce que la couronne dentée d'accouplement est constituée par une tôle (80) fermée en anneau, qui présente les dents d'accouplement (48), et qui n'est pas soutenue radialement par une virole.

2. Accouplement élastique selon la revendication 1, caractérisé en ce que la tôle (80) est réalisée sous la forme d'une tôle en zigzag avec des flancs de dents plans sur les roues dentées (48) de l'accouplement.

3. Accouplement élastique selon la revendication 1 ou 2, caractérisé en ce que la série de dents de la couronne dentée d'accouplement (90) présente au moins une zone de lacunes (122).

4. Accouplement élastique selon la revendication 3, caractérisé en ce que les zones de lacunes (122) sont disposées équidistantes.

FIG. 1

FIG. 2

FIG.3

FIG.4

FIG.5

FIG.6

FIG. 7

FIG. 8

FIG. 9

FIG. 10

FIG. 11

FIG. 12

XIII

142   182  274   276  184   144

80   247

190

XIII

FIG. 13   276   144   80

48   190